# EUROPEAN PATENT APPLICATION

(11) **EP 4 764 801 A1**
(43) Date of publication of application: **24.06.2026**
(21) Application number: 24882639.8
(22) Date of filing: 06.09.2024
(51) Int. Cl.: G06F 3/0484, G06F 3/0482, G06F 3/04817, G06F 3/14, G06F 3/041, H04W 4/80, H04W 4/06, H04M 1/72412, H04W 8/00

(54) **ELECTRONIC DEVICE, METHOD, AND NON-TRANSITORY COMPUTER-READABLE STORAGE MEDIUM FOR DISPLAYING DEVICE LIST ACCORDING TO SEARCH FOR AUDIO SOURCE DEVICE**

(30) Priority: 25.10.2023 KR 20230144182; 03.11.2023 KR 20230151248
(71) Applicant: Samsung Electronics Co., Ltd., Suwon-si, Gyeonggi-do 16677 (KR)
(72) Inventor: MOON, Youngsin, Suwon-si, Gyeonggi-do 16677 (KR); RYU, Kyusang, Suwon-si, Gyeonggi-do 16677 (KR); CHEONG, Gupil, Suwon-si, Gyeonggi-do 16677 (KR); JIN, Juyeon, Suwon-si, Gyeonggi-do 16677 (KR)
(74) Representative: Appleyard Lees IP LLP
(86) International application number: PCT/KR2024/013538
(87) International publication number: WO 2025/089610

(57) **Abstract**

An electronic device is provided. The electronic device may assist an audio sink device. The electronic device may comprise: a memory that stores instructions; a display; a communication circuit for BLE; and a processor. The instructions, when executed by the processor, may cause the electronic device to: perform a first scan for an extended advertisement caused around the electronic device by using the communication circuit; receive an advertised packet via the extended advertisement of an external electronic device; display, on the display, a device list including a visual object representing the external electronic device as a candidate audio source device; and synchronize with a periodic advertisement of the external electronic device according to a second scan for the periodic advertisement caused around the electronic device.

## Description

### [Technical Field]

The following descriptions relate to an electronic device, a method, and a non-transitory computer-readable storage medium for displaying a device list according to discovery of an audio source device.

### [Background Art]

Compared to legacy Bluetooth^{®} (or classic Bluetooth^{®}), Bluetooth^{®} low energy (BLE) may provide reduced power consumption and may provide a wide communication range between connected devices. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may assist an audio sink device. The electronic device may comprise memory storing instructions. The electronic device may comprise a display. The electronic device may comprise a communication circuit for Bluetooth low energy (BLE). The electronic device may include a processor. The instructions, when executed by the processor, may cause the electronic device to, based on detecting an event to discover an audio source device for a broadcasting service to be provided through the audio sink device, execute a first scan regarding an extended advertisement caused around the electronic device by using the communication circuit. The instructions, when executed by the processor, may cause the electronic device to receive, according to the first scan, a packet advertised through an extended advertisement of an external electronic device. The instructions, when executed by the processor, may cause the electronic device to, based on the reception of the packet, display, before synchronizing to a periodic advertisement of the external electronic device that is indicated by the packet, a device list that includes a visual object representing the external electronic device as a candidate audio source device on the display. The instructions, when executed by the processor, may cause the electronic device to, while the device list including the visual object is displayed, synchronize, according to a second scan regarding a periodic advertisement caused around the electronic device, to the periodic advertisement of the external electronic device.

A method is provided. The method may be executed in an electronic device that assists an audio sink device and has a display and a communication circuit for BLE. The method may comprise, based on detecting an event to discover an audio source device for a broadcasting service to be provided through the audio sink device, executing a first scan regarding an extended advertisement caused around the electronic device by using the communication circuit. The method may comprise receiving, according to the first scan, a packet advertised through an extended advertisement of an external electronic device. The method may comprise, based on the reception of the packet, displaying, before synchronizing to a periodic advertisement of the external electronic device that is indicated by the packet, a device list that includes a visual object representing the external electronic device as a candidate audio source device on the display. The method may comprise, while the device list including the visual object is displayed, synchronizing, according to a second scan regarding a periodic advertisement caused around the electronic device, to the periodic advertisement of the external electronic device.

A non-transitory computer-readable storage medium is provided. The non-transitory computer-readable storage medium may store one or more programs. The one or more programs may comprise instructions to, when executed by an electronic device that assists an audio sink device and has a display and a communication circuit for BLE, cause the electronic device to, based on detecting an event to discover an audio source device for a broadcasting service to be provided through the audio sink device, execute a first scan regarding an extended advertisement caused around the electronic device by using the communication circuit. The one or more programs may comprise instructions to, when executed by the electronic device, cause the electronic device to receive, according to the first scan, a packet advertised through an extended advertisement of an external electronic device. The one or more programs may comprise instructions to, when executed by the electronic device, cause the electronic device to, based on the reception of the packet, display, before synchronizing to a periodic advertisement of the external electronic device that is indicated by the packet, a device list that includes a visual object representing the external electronic device as a candidate audio source device on the display. The one or more programs may comprise instructions to, when executed by the electronic device, cause the electronic device to, while the device list including the visual object is displayed, synchronize, according to a second scan regarding a periodic advertisement caused around the electronic device, to the periodic advertisement of the external electronic device.

### [Description of the Drawings]

FIG. 1 illustrates an example of a wireless environment including an audio sink device, an electronic device assisting the audio sink device, and an audio source device.
FIG. 2 illustrates a simplified block diagram of an exemplary electronic device.
FIG. 3 illustrates a flowchart illustrating an exemplary method for displaying a device list.
FIG. 4 illustrates an example of a device list displayed on a display.
FIG. 5 illustrates a flowchart illustrating an exemplary method for checking a number of candidate audio source devices discovered according to a first scan to add a visual object to a device list.
FIG. 6 illustrates a flowchart illustrating an exemplary method for checking whether a reference time is elapsed to add a visual object to a device list.
FIG. 7 illustrates a flowchart illustrating an exemplary method for controlling a timer to add a visual object to a device list.
FIG. 8 illustrates a flowchart illustrating an exemplary method for determining an order of synchronization to a periodic advertisement executed while displaying a device list by using a received strength of a packet.
FIG. 9 illustrates an example for determining an order of synchronization to a periodic advertisement executed while displaying a device list by using a received strength of a packet.
FIG. 10 illustrates a flowchart illustrating an exemplary method for determining an order of synchronization to a periodic advertisement executed while displaying a device list by using information regarding a use history.
FIG. 11 illustrates an example for determining an order of synchronization to a periodic advertisement executed while displaying a device list by using information regarding a use history.
FIG. 12 illustrates a flowchart illustrating an exemplary method for determining an order of synchronization to a periodic advertisement executed while displaying a device list by using information regarding a preference of a user.
FIG. 13 illustrates an example for determining an order of synchronization to a periodic advertisement executed while displaying a device list by using information regarding a preference of a user.
FIG. 14 illustrates a flowchart illustrating an exemplary method for preferentially executing synchronization to a periodic advertisement of an external electronic device advertising a packet initially received through a first scan according to a second scan.
FIG. 15 illustrates a flowchart illustrating an exemplary method for executing synchronization to a periodic advertisement while displaying a device list in response to a user input.
FIG. 16 illustrates a flowchart illustrating an exemplary method for updating a device list according to synchronization to a periodic advertisement.
FIG. 17 illustrates an example of a device list updated according to synchronization to a periodic advertisement.
FIG. 18 illustrates a block diagram of an electronic device in a network environment according to various embodiments.

### [Mode for Invention]

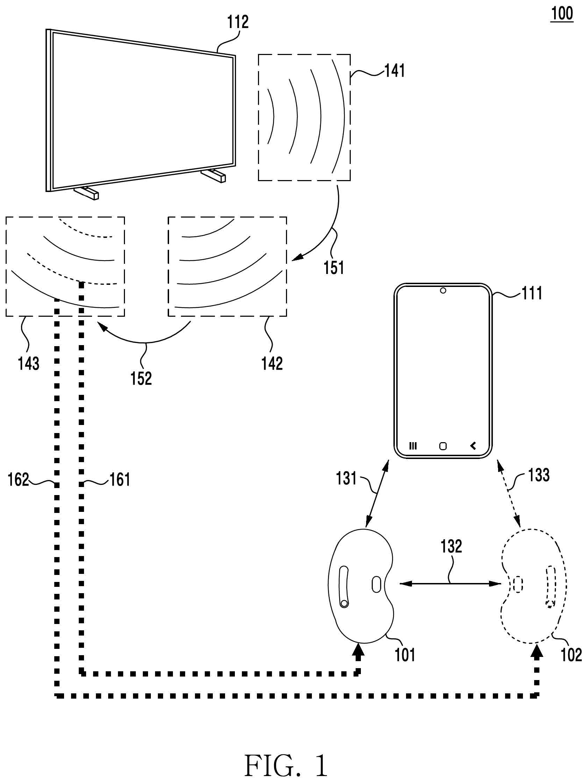

FIG. 1 illustrates an example of a wireless environment including an audio sink device, an electronic device assisting the audio sink device, and an audio source device.

Referring to FIG. 1, a wireless environment 100 may include an audio sink device 101, an electronic device 111, and an audio source device 112.

The audio sink device 101 in the environment 100 may provide an audio broadcasting service (or a broadcasting service) from the audio source device 112, in conjunction with the electronic device 111. For example, the electronic device 111 may be configured to assist the audio sink device 101.

For example, the audio sink device 101 may be configured to output audio. For example, the audio sink device 101 may output audio based on data broadcasted from the audio source device 112. For example, the audio sink device 101 may provide an audio broadcasting service based on data broadcasted from the audio source device 112.

For example, the audio sink device 101 may output audio based on data for a broadcast isochronous stream (BIS) from the audio source device 112. For example, the audio may be broadcast through a broadcast isochronous group (BIG). For example, the BIG may include multiple instances for the BIS. For example, an event of the BIG may include one or more BIS events. For example, each of the one or more BIS events may include one or more sub-events. For example, the audio may be outputted based on synchronizing to the BIS from the audio source device 112, as indicated by an arrow 161. For example, synchronizing to the BIS may indicate receiving the data for the BIS. For example, synchronizing to the BIS may be executed based on synchronizing to a periodic advertisement 142 of the audio source device 112.

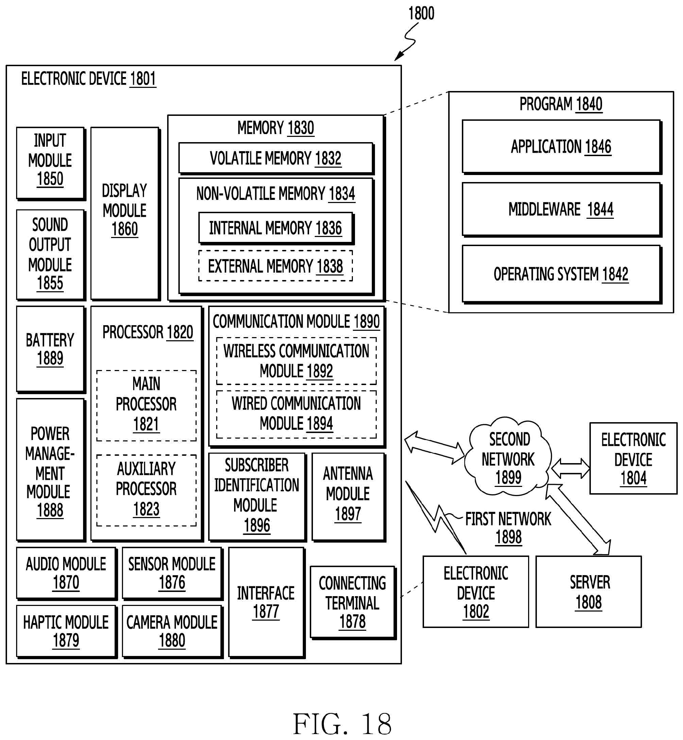

The electronic device 111 in the environment 100 may be used to assist the audio sink device 101 in synchronizing to the BIS. As a non-limiting example, the electronic device 111 may be configured to operate as an assistance device (or an assistant device) of the audio sink device 101 within the audio broadcasting service. According to embodiments, the electronic device 111 may be configured to operate as an audio source device. For example, the electronic device 111 may include at least a portion of an electronic device 1801 of FIG. 18, or may correspond to at least a portion of the electronic device 1801 of FIG. 18.

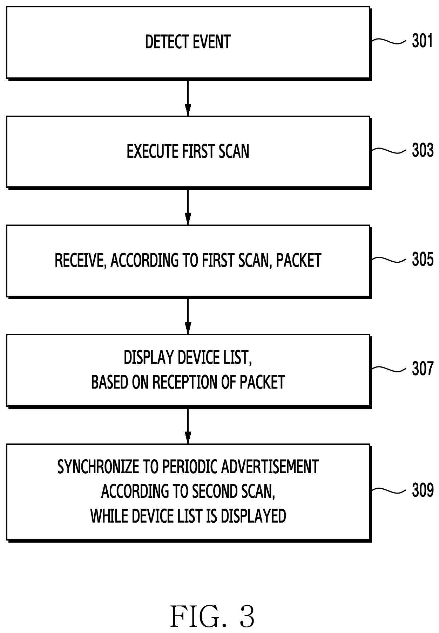

As a non-limiting example, unlike the audio sink device 101, the electronic device 111 may include a display. For example, the electronic device 111 may be configured to display, on the display, a user interface for starting an audio broadcasting service (or a broadcasting service). For example, the electronic device 111 may be configured to display, on the display, a user interface for discovering an audio source device providing the audio broadcasting service. For example, the electronic device 111 may be configured to display, on the display, a user interface for visually providing one or more candidate audio source devices discovered for the audio broadcasting service. For example, the one or more candidate audio source devices may indicate devices available for the audio broadcasting service (or the broadcasting service) outputting audio through the audio sink device 101. For example, one of the one or more candidate audio source devices may operate as an audio source device in the audio broadcasting service (or the broadcasting service), based on a user input received for a device list to be exemplified in a description of operation 307 of FIG. 3.

For example, the electronic device 111 may be configured to display, on the display, a user interface for selecting an audio source device providing audio outputted from the audio sink device 101 within the audio broadcasting service. For example, the electronic device 111 may be used to receive a user input for at least a portion of the above-exemplified user interfaces. For example, the electronic device 111 may assist the audio sink device 101 in synchronizing to the BIS through operations associated with reception of the user input.

FIG. 1 illustrates an example in which the electronic device 111 is implemented as a smartphone that is a portable device (or a multifunction device), but this is merely exemplary. The electronic device 111 may be implemented as a wearable device worn on at least a portion of a user's body. For example, the electronic device 111 may be an augmented reality (AR) device, a virtual reality (VR) device, a video see-through (or visual see-through) (VST) device, an extended reality (XR) device, or a mixed reality (MR) device, which is mounted on a user's head.

For example, the audio source device 112 may execute one or more advertisements 141 to provide the audio broadcasting service. For example, the one or more advertisements 141 may indicate a periodic advertisement 142 executed by the audio source device 112, as indicated by an arrow 151. For example, a packet advertised from the audio source device 112 according to the one or more advertisements 141 may include information regarding the periodic advertisement 142. For example, the electronic device 111 may execute a first scan regarding the one or more advertisements 141 in relation to the audio broadcasting service.

For example, the audio source device 112 may execute the periodic advertisement 142 to provide the audio broadcasting service. For example, the periodic advertisement 142 may indicate resources for broadcasting (143) the data for the BIS, as indicated by an arrow 152. For example, a packet advertised from the audio source device 112 according to the periodic advertisement 142 may include information regarding broadcasting (143) the data for the BIS (e.g., information regarding resources for broadcasting (143) the data for the BIS). For example, the electronic device 111 may execute a second scan regarding the periodic advertisement 142 in relation to the audio broadcasting service.

For example, the electronic device 111 may transmit, to the audio sink device 101, information regarding a result of the above-exemplified scan (e.g., information regarding the periodic advertisement 142). For example, the information may be transmitted to the audio sink device 101 through a communication link 131 between the audio sink device 101 and the electronic device 111. For example, the communication link 131 may include an asynchronous connectionless link (ACL) that is a control data link. However, it is not limited thereto. For example, the information may also be transmitted from the electronic device 111 to the audio sink device 101 through a device (e.g., a cradle) for accommodating the audio sink device 101 and charging the rechargeable battery of the audio sink device 101.

The audio source device 112 in the environment 100 may broadcast the data for the BIS. The audio source device 112 may execute one or more advertisements 141 to provide information for access to the data for the BIS. For example, the one or more advertisements 141 may provide information for access to the periodic advertisement 142. For example, the audio source device 112 may execute the periodic advertisement 142 to provide information for access to the data for the BIS. For example, the periodic advertisement 142 may provide information for access to the data for the BIS broadcasted from the audio source device 112. For example, the audio sink device 101 may synchronize to the BIS by accessing the data for the BIS (or receiving the data for the BIS).

As a non-limiting example, the wireless environment 100 may further include another audio sink device 102. For example, the other audio sink device 102 may be a device paired with the audio sink device 101. As a non-limiting example, the audio sink device 101 may be worn on a right ear of a user and the other audio sink device 102 may be worn on a left ear of the user. As a non-limiting example, the audio sink device 101 paired with the other audio sink device 102 may indicate that the audio sink device 101 and the other audio sink device 102 are configured as a set to provide an audio broadcasting service. As a non-limiting example, the audio sink device 101 paired with the other audio sink device 102 may indicate that the audio sink device 101 and the other audio sink device 102 are connected through a communication link 132. As a non-limiting example, the audio sink device 101 paired with the other audio sink device 102 may indicate that the audio sink device 101 and the other audio sink device 102 are used for stereophonic sound. For example, audio outputted through a speaker of the audio sink device 101 may correspond to audio outputted through a speaker of the other audio sink device 102.

For example, the other audio sink device 102 may provide an audio broadcasting service in conjunction with the electronic device 111 and the audio sink device 101.

For example, the other audio sink device 102 may be configured to output audio. For example, the other audio sink device 102 may output audio based on data broadcasted from the audio source device 112. For example, the other audio sink device 102 may provide an audio broadcasting service based on data broadcasted from the audio source device 112.

For example, the other audio sink device 102 may output audio based on the data for the BIS from the audio source device 112. For example, the other audio sink device 102 may output audio through one or more second BIS events in an event of the BIG while the audio sink device 101 outputs audio through one or more first BIS events in the event of the BIG. For example, the audio outputted from the other audio sink device 102 may be outputted based on synchronizing to the BIS from the audio source device 112, as indicated by an arrow 162. For example, synchronizing to the BIS may indicate receiving the data for the BIS. For example, synchronizing to the BIS may be executed based on synchronizing to a periodic advertisement 142 of the audio source device 112. As a non-limiting example, the other audio sink device 102 may receive, from the electronic device 111 through a communication link 133 between the other audio sink device 102 and the electronic device 111, information regarding the periodic advertisement 142 to synchronize to the periodic advertisement 142 of the audio source device 112. For example, the communication link 133 may include an ACL that is a control data link.

The electronic device 111 may display, on a display of the electronic device 111, a user interface for determining (or selecting) (or identifying) an audio source device broadcasting data for audio to be outputted from the audio sink device 101. For example, the user interface may include a device list. For example, the device list may include a visual object (or an executable object) corresponding to a candidate audio source device discovered by the electronic device 111. As a non-limiting example, the electronic device 111 may display the visual object in the list, on a condition of synchronizing to a periodic advertisement of the candidate audio source device. As a non-limiting example, when the electronic device 111 is an XR device, the user interface may be displayed on an environment around the electronic device 111 shown through the display (or an image corresponding to the environment around the electronic device 111).

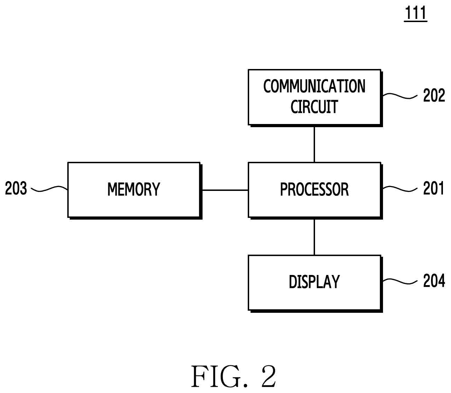

For example, the synchronization to the periodic advertisement of the candidate audio source device may be executed based on a first operation of receiving a first packet advertised on a primary advertisement channel (e.g., Ch. 37, Ch. 38, or Ch. 39) through an advertisement of the candidate audio source device, a second operation of obtaining information regarding an extended advertisement of the candidate audio source device by using the first packet, a third operation of receiving a second packet advertised through the extended advertisement of the candidate audio source device according to the information obtained by using the first packet, and a fourth operation of obtaining information regarding the periodic advertisement of the candidate audio source device by using the second packet. For example, since the synchronization to the periodic advertisement of the candidate audio source device requires execution of all of the first operation, the second operation, the third operation, and the fourth operation, a user may feel displaying the visual object in the device list according to the synchronization to the periodic advertisement of the candidate audio source device as a delay of a response speed for the synchronization to the periodic advertisement of the candidate audio source device. An electronic device 111 to be exemplified below may reduce such inconvenience of the user by displaying the visual object in the device list before the synchronization to the periodic advertisement of the candidate audio source device. For example, since the electronic device 111 displays the visual object in the device list before the synchronization to the periodic advertisement of the candidate audio source device, the electronic device 111 may increase a response speed of an audio broadcasting service (or a broadcasting service) for outputting audio from an audio source device (e.g., the audio source device 112) through an audio sink device (e.g., the audio sink device 101). For example, the electronic device 111 may include components for displaying, before the synchronization to the periodic advertisement of the candidate audio source device, the visual object. The components are exemplified in a description of FIG. 2.

FIG. 2 illustrates a simplified block diagram of an exemplary electronic device.

Referring to FIG. 2, an electronic device 111 may include a processor 201, a communication circuit 202, memory 203, and a display 204.

The processor 201 may include at least a portion of a processor 1820 of FIG. 18 or may correspond to at least a portion of the processor 1820 of FIG. 18. The processor 201 may be configured to control the communication circuit 202 and the display 204. The processor 201 may be configured to execute instructions stored in the memory 203 to cause the electronic device 111 to perform at least a portion of operations exemplified in the description of FIG. 1. The processor 201 may be configured to execute instructions stored in the memory 203 to cause the electronic device 111 to perform at least a portion of operations exemplified in descriptions of FIGS. 3 to 17.

The communication circuit 202 may support legacy Bluetooth and/or Bluetooth low energy (BLE). For example, the communication circuit 202 may be used for an audio broadcasting service. For example, the communication circuit 202 may be used for communication with the audio sink device 101 for an audio broadcasting service. For example, the communication circuit 202 may be used for communication with another audio sink device 102 for an audio broadcasting service. For example, the communication circuit 202 may be used for communication with an audio source device, such as an audio source device 112.

The memory 203 may be configured to store instructions (or one or more programs storing the instructions). For example, the memory 203 may include a non-volatile memory. For example, the memory 203 may include at least a portion (e.g., a non-volatile memory 1834) of memory 1830 of FIG. 18 or may correspond to at least a portion of the memory 1830 of FIG. 18.

The display 204 may be configured to display visual information, visual data, an image, and/or a user interface. As a non-limiting example, the display 204 may be configured to receive an input (e.g., a touch input). For example, the display 204 may be used for an audio broadcasting service. For example, the display 204 may be used to display a device list to be exemplified below.

The electronic device 111 exemplified in the description of FIG. 2 may execute at least a portion of operations exemplified in descriptions of FIGS. 3 to 17.

FIG. 3 illustrates a flowchart illustrating an exemplary method for displaying a device list.

Referring to FIG. 3, in operation 301, the processor 201 may detect an event to discover an audio source device for a broadcasting service to be provided through the audio sink device 101 (or the audio sink device 101 and the other audio sink device 102) connected to the electronic device 111.

The event may be set variously.

For example, the event may include receiving a touch input on an executable object (or an icon) (or a visual object) corresponding to a software application for a broadcasting service (or an audio broadcasting service). As a non-limiting example, the touch input may be caused by a part (e.g., a finger) of a user's body positioned on (and/or positioned over) the display 204 of the electronic device 111. As a non-limiting example, the touch input may be caused by a stylus pen (or an electronic pen) positioned on (and/or positioned over) the display 204. As a non-limiting example, the touch input may be replaced with a gesture input caused through an input means capable of causing a touch input (e.g., causing a gesture having a predetermined pattern through a stylus pen gripped by a user). As a non-limiting example, the touch input may be replaced with an input of pressing a physical button of a gesture input caused through an input means capable of causing a touch input (e.g., pressing a physical button of a stylus pen gripped by a user). As a non-limiting example, the gesture input and/or the input of pressing the physical button may be received, recognized, or identified by using the communication circuit 202.

As a non-limiting example, the touch input may be received to initiate executing the software application. As a non-limiting example, the touch input may be received to change an execution state of the software application. For example, the touch input may be received to change the execution state from a background execution state to a foreground execution state. For example, the background execution state may indicate a state of executing the software application while not displaying a user interface provided from the software application by using the display 204. For example, the foreground execution state may indicate a state of executing the software application while at least partially displaying the user interface provided from the software application by using the display 204. For example, the background execution state may indicate an execution state of the software application that is unnoticeable to a user. For example, the foreground execution state may indicate an execution state of the software application that is noticeable to a user. The above descriptions describe that the software application is a software application for a broadcasting service, but this is merely exemplary. For example, the software application may be a software application used to access another electronic device. For example, the software application may be a software application used to support connection-based communication with the other electronic device and non-connection-based communication with the other electronic device.

For example, the event may include receiving a gaze input on an executable object (or an icon) (or a visual object) (or a virtual object) corresponding to a software application for a broadcasting service (or an audio broadcasting service). In an embodiment in which the electronic device 111 is an AR device, a VR device, a VST device, an XR device, or an MR device that is mounted on a user's head, the electronic device 111 may obtain an image and/or a video for two eyes of the user. The electronic device 111 may detect the gaze input by using motions of the two eyes detected by using the image and/or the video. For example, the gaze input may be caused by a camera (e.g., an infrared camera) disposed toward at least one of the two eyes of the user wearing the electronic device 111.

For example, the event may include receiving a remote gesture input on an executable object (or an icon) (or a visual object) (or a virtual object) corresponding to a software application for a broadcasting service (or an audio broadcasting service). In terms of being detected without direct contact with the electronic device 111, an input by a hand spaced apart from the electronic device 111 may be referred to as a remote gesture input. For example, in an embodiment in which the electronic device 111 is an AR device, a VR device, a VST device, an XR device, or an MR device that is mounted on a user's head, the electronic device 111 may detect the user's hand from an image and/or a video. By using a shape, an action, and/or a direction of the detected hand, the electronic device 111 may detect the remote gesture input. For example, the remote gesture input may be caused by one or more cameras disposed toward a designated direction of a head while being worn on the user's head.

For example, the event may include causing the electronic device 111 to display a user interface provided from the software application for a broadcasting service and including a device list. For example, the user interface may be displayed to view (or watch) a broadcasting service that is being caused around a user (or around the electronic device 111).

For example, the event may include receiving a voice command (or a voice input) such as "find a broadcasting service being provided around".

In operation 303, the processor 201 may execute, based on detecting the event in operation 301, a first scan regarding an extended advertisement caused around the electronic device 111 by using the communication circuit 202. For example, the first scan may be executed to receive a packet advertised on a primary advertisement channel (e.g., Ch. 37, Ch. 38, or Ch. 39). For example, the first scan may be executed to receive a packet advertised through an extended advertisement, based on the packet advertised on the primary advertisement channel. For example, the first scan may be distinguished from a second scan to be exemplified below. For example, unlike the second scan including receiving a packet advertised through a periodic advertisement, the first scan may include receiving the packet advertised through the extended advertisement. The term "first scan" and the term "second scan" are used in this document to distinguish receiving a packet advertised through an extended advertisement and receiving a packet advertised through a periodic advertisement.

In operation 305, the processor 201 may receive, according to the first scan, a packet (e.g., AUX_ADV_IND) advertised through an extended advertisement of an external electronic device. For example, the processor 201 may receive, according to the first scan, another packet (e.g., ADV_EXT_IND) advertised on the primary advertisement channel from the external electronic device, and may receive, according to the first scan, the packet advertised in the extended advertisement of the external electronic device indicated by the received other packet.

In operation 307, the processor 201 may, based on the reception of the packet, display, on the display 204, a device list that includes a visual object representing (or indicating) the external electronic device as a candidate audio source device (or a visual object corresponding to the external electronic device), before synchronizing to a periodic advertisement of the external electronic device indicated by the packet.

For example, the processor 201 may display, before the synchronization to the periodic advertisement of the external electronic device, the visual object in the device list, to quickly provide a response to the event in operation 301.

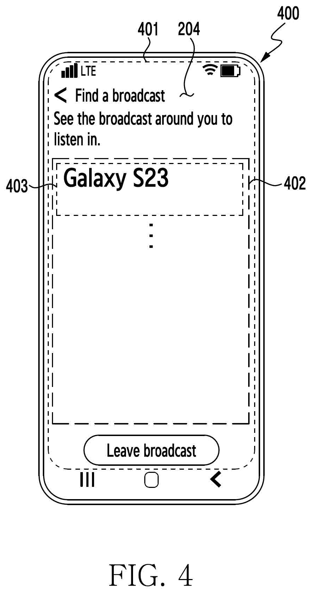

For example, in a case that a packet has been received through an extended advertisement of another external electronic device according to the first scan before the electronic device 111 receives the packet in operation 305, the processor 201 may update (or change) (or refine) the device list, by adding the visual object into the device list including another visual object representing the other external electronic device as another candidate audio source device. For example, in a case that the packet received in operation 305 is a packet first received through an extended advertisement according to the first scan, the processor 201 may cause the visual object to appear in the device list. The device list is exemplified in a description of FIG. 4.

FIG. 4 illustrates an example of a device list displayed on a display.

Referring to FIG. 4, the processor 201 may display, on the display 204, a user interface 401, as in a state 400. For example, the processor 201 may execute the first scan in response to an event (e.g., the event in operation 301) causing a start of display of the user interface 401. For example, the processor 201 may display, within the user interface 401, a device list 402 in response to receiving, according to the first scan, a packet advertised through an extended advertisement of an external electronic device positioned around the electronic device 111. For example, the device list 402 may include a visual object 403 corresponding to the external electronic device. For example, the visual object 403 may appear in the device list 402, in response to the packet. For example, the visual object 403 may include at least a portion of information obtained from the packet. For example, the visual object 403 may include, as the at least a portion of the information, a type of the external electronic device (e.g., smartphone, TV, or refrigerator), a device name of the external electronic device (e.g., Galaxy S23, or Galaxy S22), information of a broadcasting service (or an audio broadcasting service) provided from the external electronic device, and/or information of content played through the broadcasting service. For example, the at least a portion of the information may be implemented as text, as illustrated in FIG. 4. However, it is not limited thereto.

For example, the visual object 403 may be displayed in the device list 402 before attempting synchronization to the periodic advertisement of the external electronic device (or before starting the second scan for the synchronization to the periodic advertisement of the external electronic device). For example, the visual object 403 may be displayed in the device list 402 while executing the second scan for the synchronization to the periodic advertisement of the external electronic device. For example, the visual object 403 may be displayed in the device list 402 before the synchronization to the periodic advertisement of the external electronic device (or before completion of the synchronization to the periodic advertisement of the external electronic device). For example, the visual object 403 may be displayed in the device list 402, before a request to synchronize to the periodic advertisement of the external electronic device (e.g., "LE Periodic Advertising Create Sync") occurs in the electronic device 111. For example, the visual object 403 may be displayed in the device list 402, before a response to the request (e.g., "LE Periodic Advertising Sync Established") occurs in the electronic device 111. However, it is not limited thereto.

Referring again to FIG. 3, in operation 309, the processor 201 may synchronize to the periodic advertisement of the external electronic device according to the second scan regarding a periodic advertisement caused around the electronic device 111, while the device list including the visual object is displayed.

For example, the processor 201 may obtain, from the packet received in operation 305, information regarding the periodic advertisement of the external electronic device (e.g., logical link (LL)_PERIODIC_SYNC_IND), while displaying the device list including the visual object based on the packet received in operation 305. For example, the processor 201 may receive a packet (e.g., AUX_SYNC_IND) advertised through the periodic advertisement of the external electronic device by executing the second scan by using the obtained information. For example, the processor 201 may synchronize to the periodic advertisement of the external electronic device by receiving the packet advertised through the periodic advertisement of the external electronic device. For example, the packet advertised through the periodic advertisement of the external electronic device may include information regarding an interval of the periodic advertisement of the external electronic device, information regarding an offset of transmission according to the periodic advertisement of the external electronic device, information regarding a channel map of the periodic advertisement of the external electronic device, information regarding ACL, information regarding an initial value of cyclic redundancy check (CRC), information regarding a counter (e.g., PeriodicEventCounter) of an event of the periodic advertisement of the external electronic device, and information (or advertisement data) regarding a broadcast isochronous group (BIG) (e.g., including multiple instances for a BIS from the external electronic device) scheduled (or generated) (or obtained) by the external electronic device. For example, the packet advertised through the periodic advertisement of the external electronic device may include program information (or content information) provided through a BIS from the external electronic device. For example, the packet advertised through the periodic advertisement of the external electronic device may be used to synchronize to a BIS from the external electronic device.

As described above, the electronic device 111 may provide an enhanced user experience (e.g., quick responsiveness or enhanced responsiveness) related to a broadcasting service by displaying, before the synchronization to the periodic advertisement of the external electronic device executed in operation 309, the visual object in the device list. As a non-limiting example, since the device list used to select an audio source device providing audio to be outputted through the audio sink device 101 (or the audio sink device 101 and the other audio sink device 102) is quickly updated by displaying the visual object before the synchronization to the periodic advertisement of the external electronic device, the electronic device 111 may induce that a user input for selecting (or determining) the audio source device is quickly received. For example, the electronic device 111 may reduce resources consumed for synchronization to an unnecessary periodic advertisement. For example, the electronic device 111 may reduce an amount of computation executed for an audio broadcasting service (or a broadcasting service) by displaying the visual object before the synchronization to the periodic advertisement of the external electronic device.

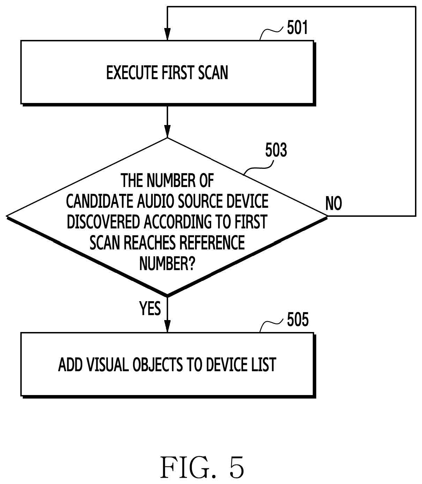

For example, in addition to the condition (e.g., receiving a packet advertised through an extended advertisement) exemplified in the description of FIG. 4, another condition may be further used by the electronic device 111 to add a visual object to the device list displayed on the display 204. The other condition is exemplified in the descriptions of FIGS. 5 to 7.

FIG. 5 illustrates a flowchart illustrating an exemplary method for checking a number of candidate audio source devices discovered according to a first scan to add a visual object to a device list.

Referring to FIG. 5, in operation 501, the processor 201 may execute the first scan exemplified in the description of FIG. 3. For example, operation 501 may correspond to operation 303 of FIG. 3.

In operation 503, the processor 201 may check, identify, determine, or monitor whether the number of external electronic devices discovered according to the first scan reaches a reference number while executing the first scan. For example, the processor 201 may receive packets advertised through an extended advertisement while executing the first scan. For example, the processor 201 may discover the external electronic devices based on the packets. For example, the processor 201 may count the number of the external electronic devices discovered according to the first scan while executing the first scan. For example, the processor 201 may refrain from, skip, bypass, or disable displaying visual objects respectively corresponding to the external electronic devices in the device list before the counted number reaches the reference number. For example, the processor 201 may bypass, refrain from, skip, or disable executing operation 505, based on the counted number equal to or less than the reference number. For example, the processor 201 may execute operation 505 based on the counted number reaching the reference number.

In operation 505, the processor 201 may add the visual objects to the device list displayed on the display 204, on a condition that the counted number reaches the reference number. As a non-limiting example, the processor 201 may display the device list including the visual objects (including the visual objects exemplified in the description of FIG. 4) respectively representing the external electronic devices as candidate audio source devices, based on checking that the number counted according to the reception of the packet in operation 305 of FIG. 3 reaches the reference number.

As a non-limiting example, the device list displayed on the display 204 may be full by the added visual objects before a scroll input is received. As a non-limiting example, synchronization to at least a portion of periodic advertisements respectively executed by the external electronic devices respectively corresponding to the visual objects may be executed after the visual objects are added into the device list.

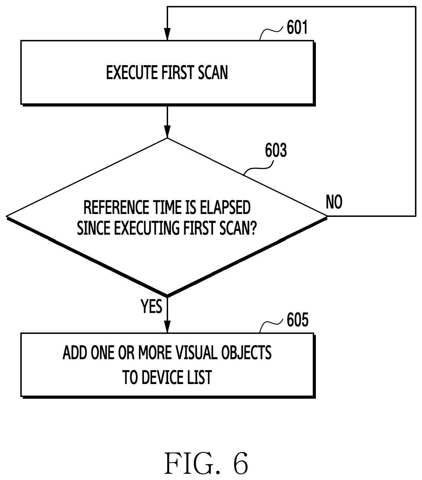

FIG. 6 illustrates a flowchart illustrating an exemplary method for checking whether a reference time is elapsed to add a visual object to a device list.

Referring to FIG. 6, in operation 601, the processor 201 may execute the first scan exemplified in the description of FIG. 3. For example, operation 601 may correspond to operation 303 of FIG. 3.

In operation 603, the processor 201 may check, while executing the first scan, whether a reference time (e.g., 500 (millisecond (ms)) is elapsed since executing the first scan. As a non-limiting example, since changing (or updating) (or improving) the device list whenever discovering a candidate audio source device according to the first scan may not be suitable in terms of power consumption, the processor 201 may check whether the reference time is elapsed since starting the first scan. For example, the processor 201 may refrain from, skip, bypass, or disable displaying, in the device list, one or more visual objects respectively corresponding to one or more external electronic devices discovered according to the first scan before the reference time is elapsed. For example, the processor 201 may bypass, refrain from, skip, or disable executing operation 605 before the reference time is elapsed. For example, the processor 201 may execute operation 605 based on checking that the reference time is elapsed.

In operation 605, the processor 201 may add the one or more visual objects to the device list displayed on the display 204, on a condition that the reference time is elapsed. As a non-limiting example, the processor 201 may display the device list including the visual object, in response to checking that the reference time is elapsed after receiving the packet in operation 305 of FIG. 3.

The above descriptions of FIG. 6 illustrate that a timing at which the reference time starts is a timing at which the first scan starts, but this is merely exemplary. The timing at which the reference time starts may be implemented variously. For example, the timing at which the reference time starts may be set to a timing of detecting the event in operation 301.

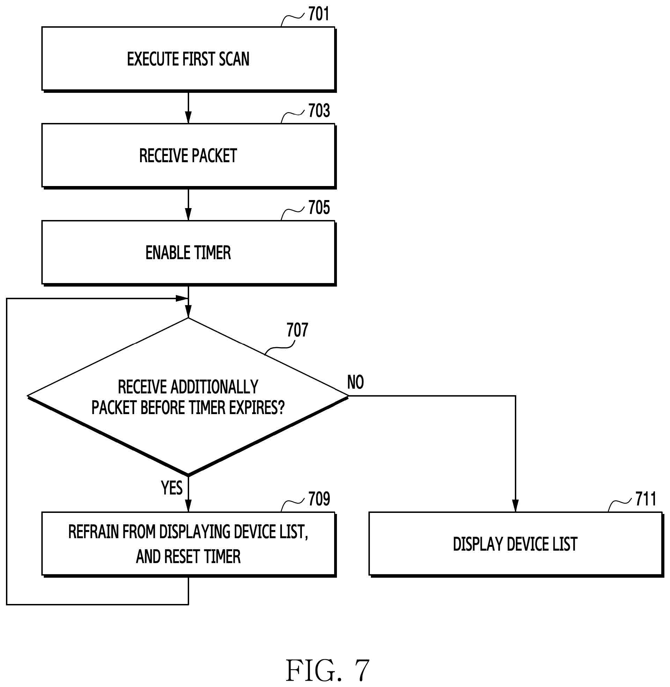

FIG. 7 illustrates a flowchart illustrating an exemplary method for controlling a timer to add a visual object to a device list.

Referring to FIG. 7, in operation 701, the processor 201 may execute the first scan exemplified in the description of FIG. 3. For example, operation 601 may correspond to operation 303 of FIG. 3.

In operation 703, the processor 201 may receive the packet advertised through the extended advertisement of the external electronic device exemplified in the description of FIG. 3 according to the first scan. As a non-limiting example, the packet may be an extended advertising packet initially received according to the first scan started in response to the event exemplified in operation 301 of FIG. 3.

In operation 705, the processor 201 may enable a timer in response to the reception of the packet. For example, the timer may be defined in the electronic device 111 to determine (or identify) a timing of executing adding a new visual object to the device list. As a non-limiting example, a length of the timer may be 200 (ms).

In operation 707, the processor 201 may check whether additionally receiving a packet advertised through an extended advertisement before the timer expires. For example, the processor 201 may execute operation 709 based on a packet additionally received through an extended advertisement before the timer expires. For example, the processor 201 may execute operation 711, in response to expiry of the timer.

In operation 709, the processor 201 may, on a condition that, before the timer expires, a packet advertised through an extended advertisement (e.g., the packet advertised through the extended advertisement and the packet received in operation 703 are advertised by different devices) is additionally received, refrain from displaying the device list including a visual object (e.g., the visual object exemplified in the description of FIG. 3) corresponding to an external electronic device (e.g., the external electronic device exemplified in the description of FIG. 3) that advertise the packet received in operation 703, and may reset the timer. As a non-limiting example, the processor 201 may, based on receiving another packet advertised through an extended advertisement of another external electronic device according to the first scan before expiry of the timer, refrain from displaying the device list including the visual object, and may reset the timer. For example, the processor 201 may defer displaying the device list including the visual object (or changing the device list) (or updating the device list) (or improving the device list), in response to an additional reception executed before the timer expires. For example, the processor 201 may check whether additionally receiving an extended advertising packet before the reset timer expires in response to the additional reception. As a non-limiting example, when the reset timer expires without an additional reception of an extended advertising packet, the processor 201 may display, on the display 204, a device list including the visual object representing the external electronic device and another visual object representing the other external electronic device (that is, a device list including visual objects representing external electronic devices that advertise extended advertising packets before expiry of the timer).

In operation 711, the processor 201 may, on a condition that a packet advertised through an extended advertisement is not additionally received until the timer expires, display the device list including a visual object (e.g., the visual object exemplified in the description of FIG. 3) corresponding to an external electronic device (e.g., the external electronic device exemplified in the description of FIG. 3) that advertises the packet received in operation 703. For example, operation 711 may be executed when packets respectively advertised from one or more external electronic devices around the electronic device 111, different from the external electronic device, are not received until expiry of the timer. For example, operation 711 may be executed when any extended advertising packet is not received after enabling the timer in operation 705 according to reception of operation 703.

For example, the processor 201 may display the device list including the visual object obtained according to the reception of the packet in operation 703, in response to expiry of the timer, to provide quick responsiveness.

At least a portion of the descriptions of FIG. 5 to FIG. 7 may be combined with or added to at least a portion of operations represented through the description of FIG. 3. However, it is not limited thereto.

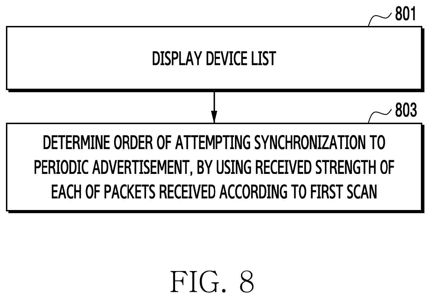

For example, the processor 201 may determine an order of attempting synchronization to a periodic advertisement executed according to the second scan while displaying the device list as in operation 307 of FIG. 3. For example, the order may be determined by using a received strength of a packet. Determining the order by using the received strength of the packet is exemplified in a description of FIG. 8.

FIG. 8 illustrates a flowchart illustrating an exemplary method for determining an order of synchronization to a periodic advertisement executed while displaying a device list by using a received strength of a packet.

Referring to FIG. 8, in operation 801, the processor 201 may display the device list exemplified in the description of FIG. 3. For example, operation 801 may correspond to operation 307 of FIG. 3. For example, the device list may be displayed based on packets (e.g., extended advertising packets) received according to the first scan exemplified in the description of FIG. 3.

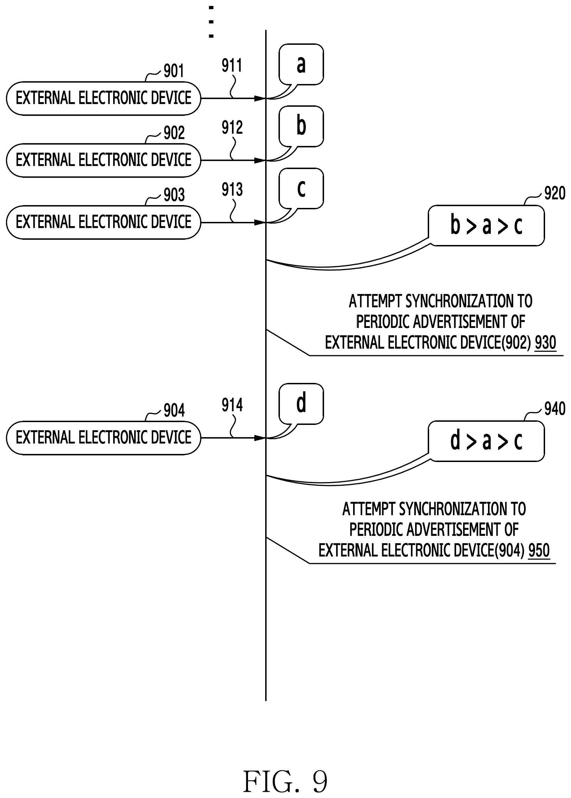

In operation 803, the processor 201 may determine an order of attempting synchronization to a periodic advertisement to be executed according to the second scan, by using a received strength (e.g., received signal strength indicator (or received signal strength indication) (RSSI)) of each of the packets received according to the first scan while the device list is displayed. For example, according to the determined order, the processor 201 may first execute attempting synchronization to a periodic advertisement of a candidate audio source device (e.g., corresponding to a visual object in the device list) that advertises a packet having a highest received strength among the packets. This operation is exemplified in a description of FIG. 9.

FIG. 9 illustrates an example for determining an order of synchronization to a periodic advertisement executed while displaying a device list by using a received strength of a packet.

Referring to FIG. 9, the processor 201 may receive a packet 911 advertised from an external electronic device 901 according to the first scan. For example, a received strength of the packet 911 may be 'a'. For example, the processor 201 may receive a packet 912 advertised from an external electronic device 902 according to the first scan. For example, a received strength of the packet 912 may be 'b' higher than 'a'. For example, the processor 201 may receive a packet 913 advertised from an external electronic device 903 according to the first scan. For example, a received strength of the packet 913 may be 'c' lower than 'a'. As a non-limiting example, the processor 201 may display, on the display 204, a device list including a visual object representing the external electronic device 901 as a candidate audio source device, a visual object representing the external electronic device 902 as a candidate audio source device, and a visual object representing the external electronic device 903 as a candidate audio source device, by using the packet 911, the packet 912, and the packet 913.

For example, the processor 201 may execute a comparison of received strengths of packets to determine an order of attempting synchronization to a periodic advertisement executed according to the second scan while displaying the device list. For example, the processor 201 may check a received strength of each of received packets (e.g., the packet 911, the packet 912, and the packet 913), before executing the comparison. For example, the processor 201 may determine an order of attempting synchronization to a periodic advertisement executed according to the second scan while displaying the device list, based on a received strength (e.g., 'a') of the packet 911, a received strength (e.g., 'b') of the packet 912, and a received strength (e.g., 'c') of the packet 913. For example, the processor 201 may check that a received strength (e.g., 'b') of the packet 912 is higher than a received strength (e.g., 'a') of the packet 911 and a received strength (e.g., 'c') of the packet 913, as in a state 920. For example, the processor 201 may, based on the checking, attempt synchronization to a periodic advertisement of the external electronic device 902 before attempting synchronization to a periodic advertisement of the external electronic device 901 and attempting synchronization to a periodic advertisement of the external electronic device 903, as in operation 930. As a non-limiting example, the processor 201 may synchronize to the periodic advertisement of the external electronic device 902 by receiving a packet advertised through the periodic advertisement of the external electronic device 902 according to the attempting.

For example, the processor 201 may receive a packet 914 advertised from an external electronic device 904 according to the first scan, after executing operation 930. As a non-limiting example, the first scan executed after executing operation 930 may be executed while performing the second scan. For example, the first scan while executing the second scan may be executed through resources distinguished from resources allocated to receive a packet advertised through the periodic advertisement of the external electronic device 902 according to the second scan. For example, the second scan may be executed within a time interval from 'LE Periodic Advertising Create Sync' to 'LE Periodic Advertising Sync Established'. For example, the first scan may be executed within a portion of the time interval in which the second scan is not executed.

For example, a received strength of the packet 914 received according to the first scan may be 'd' higher than 'a'. As a non-limiting example, the processor 201 may further display, in the device list, a visual object representing the external electronic device 904 as a candidate audio source device by further using the packet 914.

For example, the processor 201 may check a received strength (e.g., 'd') of the packet 914 higher than a received strength (e.g., 'a') of the packet 911 and a received strength (e.g., 'c') of the packet 913 while displaying the device list, as in a state 940. For example, the processor 201 may, based on the checking, attempt synchronization to a periodic advertisement of the external electronic device 904 before attempting synchronization to a periodic advertisement of the external electronic device 901 and attempting synchronization to a periodic advertisement of the external electronic device 903, as in operation 950. As a non-limiting example, the processor 201 may synchronize to the periodic advertisement of the external electronic device 904 by receiving a packet advertised through the periodic advertisement of the external electronic device 904 according to the attempting.

As described above, the electronic device 111 may determine an order of synchronization to a periodic advertisement based on a received strength of a packet received according to the first scan. Since a received strength of the packet being higher than a received strength of another packet may indicate that audio output based on the packet through the audio sink device 101 (or the audio sink device 101 and the other audio sink device 102) is capable of outputting audio having higher quality than audio output based on the other packet, the electronic device 111 may provide an enhanced broadcasting service by determining an order of synchronization to a periodic advertisement based on a received strength of a packet received according to the first scan.

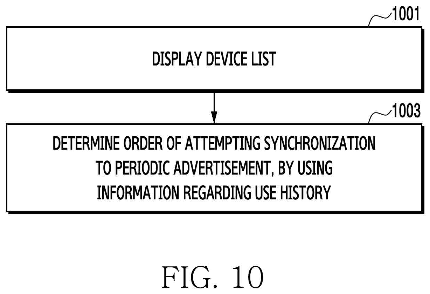

As another example, an order of attempting synchronization to a periodic advertisement executed according to the second scan may be determined by using information regarding a past use history. Determining the order according to the past use history is exemplified in a description of FIG. 10.

FIG. 10 illustrates a flowchart illustrating an exemplary method for determining an order of synchronization to a periodic advertisement executed while displaying a device list by using information regarding a use history.

Referring to FIG. 10, in operation 1001, the processor 201 may display the device list exemplified in the description of FIG. 3. For example, operation 1001 may correspond to operation 307 of FIG. 3. For example, the device list may be displayed based on packets (e.g., extended advertising packets) received according to the first scan exemplified in the description of FIG. 3.

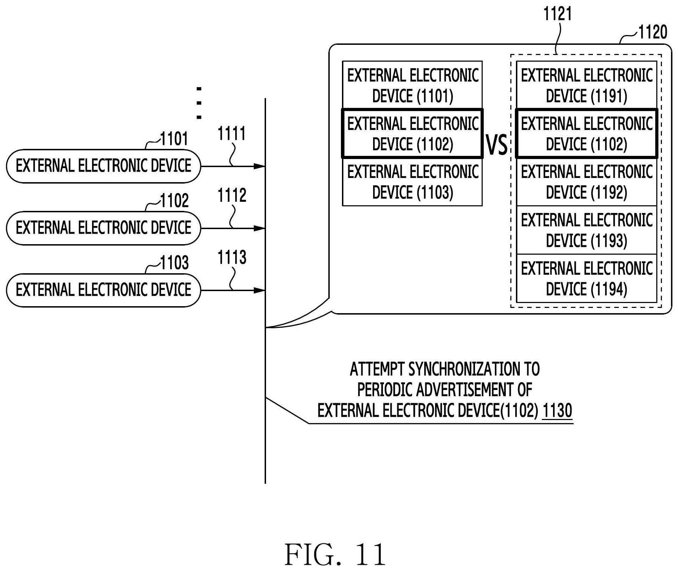

In operation 1003, the processor 201 may determine an order of attempting synchronization to a periodic advertisement to be executed according to the second scan, by using information regarding a use history (or a past use history) while the device list is displayed. For example, the information may be pre-stored in the memory 203. As a non-limiting example, the information may be stored in the memory 203 before detecting the event in operation 301. For example, according to the determined order, the processor 201 may attempt, before attempting synchronization to a periodic advertisement of another external electronic device (e.g., one of the external electronic devices that advertise the packets received according to the first scan) that has never previously provided audio outputted through the audio sink device 101, synchronization to a periodic advertisement of an external electronic device (e.g., another one of the external electronic devices that advertise the packets received according to the first scan) that previously provided audio outputted through the audio sink device 101. This operation is exemplified in a description of FIG. 11.

FIG. 11 illustrates an example for determining an order of synchronization to a periodic advertisement executed while displaying a device list by using information regarding a use history.

Referring to FIG. 11, the processor 201 may receive a packet 1111 advertised from an external electronic device 1101 according to the first scan. For example, the processor 201 may receive a packet 1112 advertised from an external electronic device 1102 according to the first scan. For example, the processor 201 may receive a packet 1113 advertised from an external electronic device 1103 according to the first scan. As a non-limiting example, the processor 201 may display, on the display 204, a device list including a visual object representing the external electronic device 1101 as a candidate audio source device, a visual object representing the external electronic device 1102 as a candidate audio source device, and a visual object representing the external electronic device 1103 as a candidate audio source device, by using the packet 1111, the packet 1112, and the packet 1113.

For example, the processor 201 may obtain (or read) information 1121 regarding a use history (or a past use history) from the memory 203, to determine an order of attempting synchronization to a periodic advertisement executed according to the second scan while displaying the device list. For example, the information 1121 may include data regarding an audio source device that previously provided audio outputted through the audio sink device 101 (or the audio sink device 101 and the other audio sink device 102). As a non-limiting example, the information 1121 may include data regarding an external electronic device 1191, data regarding the external electronic device 1102, data regarding an external electronic device 1192, data regarding an external electronic device 1193, and data regarding an external electronic device 1194. As a non-limiting example, the above-exemplified data (e.g., the data regarding the external electronic device 1191, the data regarding the external electronic device 1102, the data regarding the external electronic device 1192, the data regarding the external electronic device 1193, and the data regarding the external electronic device 1194) may be included in the information 1121 in a chronological order. As a non-limiting example, the above-exemplified data (e.g., the data regarding the external electronic device 1191, the data regarding the external electronic device 1102, the data regarding the external electronic device 1192, the data regarding the external electronic device 1193, and the data regarding the external electronic device 1194) may be included in the information 1121 in an order of frequency. For example, the processor 201 may determine an order of synchronization to the periodic advertisement by using the information 1121 obtained from the memory 203, as indicated in a state 1120. For example, as indicated in the state 1120, the processor 201 may check that the data regarding the external electronic device 1102 from among the external electronic device 1101 advertising the packet 1111, the external electronic device 1102 advertising the packet 1112, and the external electronic device 1103 advertising the packet 1113 is included in the information 1121. For example, the processor 201 may, based on the checking, attempt synchronization to a periodic advertisement of the external electronic device 1102 before attempting synchronization to a periodic advertisement of the external electronic device 1101 and attempting synchronization to a periodic advertisement of the external electronic device 1103, as in operation 1130. As a non-limiting example, the processor 201 may synchronize to the periodic advertisement of the external electronic device 1102 by receiving a packet advertised through the periodic advertisement of the external electronic device 1102 according to the attempting.

As described above, the electronic device 111 may determine an order of synchronization to a periodic advertisement, based on information regarding a past use history. Since a probability that an audio source device that previously provided audio is used for a broadcasting service provided according to assistance of the electronic device 111 is higher than a probability that an audio source device that has never previously provided audio is used for the broadcasting service provided according to assistance of the electronic device 111, the electronic device 111 may provide an enhanced broadcasting service by determining an order of synchronization to a periodic advertisement according to the past use history.

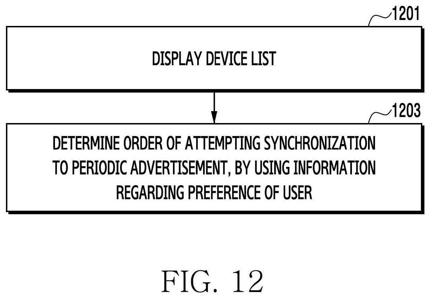

As another example, an order of attempting synchronization to a periodic advertisement executed according to the second scan may be determined by using information regarding a preference of a user. As a non-limiting example, the information regarding the preference may be obtained through information (e.g., the information regarding the use history exemplified in the descriptions of FIG. 10 and FIG. 11) regarding a past use history of the electronic device 111 related to a broadcasting service. For example, the information regarding the preference may be obtained by using a model trained by using the past use history. For example, the model may be stored in the electronic device 111, or may be stored in another electronic device (e.g., a server) distinguished from the electronic device 111. Determining the order according to the information regarding the preference is exemplified in a description of FIG. 12.

FIG. 12 illustrates a flowchart illustrating an exemplary method for determining an order of synchronization to a periodic advertisement executed while displaying a device list by using information regarding a preference of a user.

Referring to FIG. 12, in operation 1201, the processor 201 may display the device list exemplified in the description of FIG. 3. For example, operation 1201 may correspond to operation 307 of FIG. 3. For example, the device list may be displayed based on packets (e.g., extended advertising packets) received according to the first scan exemplified in the description of FIG. 3.

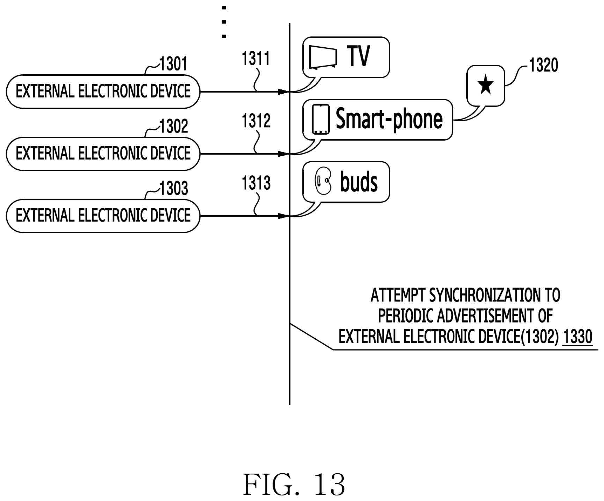

In operation 1203, the processor 201 may determine an order of attempting synchronization to a periodic advertisement to be executed according to the second scan, by using information regarding a preference of a user of the electronic device 111 (or a user of the audio sink device 101) while the device list is displayed. For example, the information may be pre-stored in the memory 203. As a non-limiting example, the information may be stored in the memory 203 before detecting the event in operation 301. As a non-limiting example, the information may include data indicating a type of an audio source device that provides audio outputted through an audio sink device (e.g., the audio sink device 101 (or the audio sink device 101 and the other audio sink device 102)) preferred by a user. For example, the processor 201 may check a type of each of external electronic devices advertising the packets. For example, according to the checking, the processor 201 may determine (or check) that a type of an external electronic device among the external electronic devices corresponds to a type indicated by the data and a type of another external electronic device among the external electronic devices is different from the type indicated by the data. For example, the processor 201 may, based on the determination, attempt synchronization to a periodic advertisement of the external electronic device before attempting synchronization to a periodic advertisement of the other external electronic device. This operation is exemplified in a description of FIG. 13.

FIG. 13 illustrates an example for determining an order of synchronization to a periodic advertisement executed while displaying a device list by using information regarding a preference of a user.

Referring to FIG. 13, the processor 201 may receive a packet 1311 advertised from an external electronic device 1301 according to the first scan. For example, the processor 201 may recognize, determine, or identify that a type of the external electronic device 1301 is a TV by using the packet 1311. For example, the processor 201 may receive a packet 1312 advertised from an external electronic device 1302 according to the first scan. For example, the processor 201 may recognize, determine, or identify that a type of the external electronic device 1302 is a smartphone by using the packet 1312. For example, the processor 201 may receive a packet 1313 advertised from an external electronic device 1303 according to the first scan. For example, the processor 201 may recognize, determine, or identify that a type of the external electronic device 1303 is buds (or wireless earphones) by using the packet 1313. For example, the external electronic device 1303 that is buds (or the external electronic device 1303 operating as an audio source device), may be a device configured to broadcast data regarding audio obtained through a microphone of the external electronic device 1303. For example, the external electronic device 1303 that is buds may be a device configured to generate or schedule or obtain BIS.

As a non-limiting example, the processor 201 may display, on the display 204, a device list including a visual object representing the external electronic device 1301 as a candidate audio source device, a visual object representing the external electronic device 1302 as a candidate audio source device, and a visual object representing the external electronic device 1303 as a candidate audio source device, by using the packet 1311, the packet 1312, and the packet 1313.

For example, the processor 201 may obtain (or read), from the memory 203, information (not illustrated in FIG. 13) regarding a preference of a user of the electronic device 111, to determine an order of attempting synchronization to a periodic advertisement executed according to the second scan while displaying the device list. For example, the information may indicate that a type of an audio source device preferred by the user is a smartphone. For example, the processor 201 may recognize, by using the information, that a preference of the user for the external electronic device 1302 is higher than a preference of the user for the external electronic device 1301 and a preference of the user for the external electronic device 1303, as in a state 1320. For example, according to the recognition, the processor 201 may attempt synchronization to a periodic advertisement of the external electronic device 1302 before attempting synchronization to a periodic advertisement of the external electronic device 1301 and attempting synchronization to a periodic advertisement of the external electronic device 1303, as in operation 1330. As a non-limiting example, the processor 201 may synchronize to the periodic advertisement of the external electronic device 1302 by receiving a packet advertised through the periodic advertisement of the external electronic device 1302 according to the attempting.

As described above, the electronic device 111 may determine an order of synchronization to a periodic advertisement based on information regarding a preference of a user. For example, since the electronic device 111 determines the order based on information regarding a preference of a user, the electronic device 111 may reduce synchronizing to a periodic advertisement that is not suitable for the user. For example, the electronic device 111 may provide an enhanced broadcasting service.

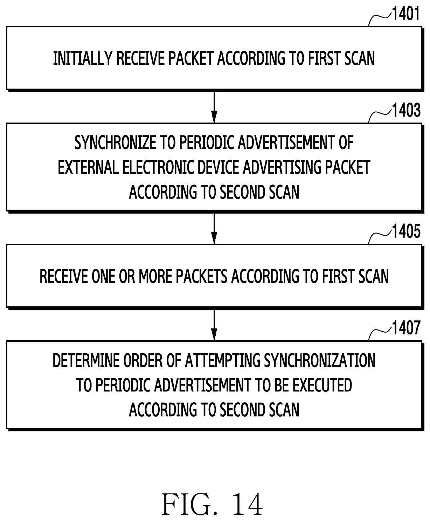

As another example, the processor 201 may attempt synchronization to a periodic advertisement of an external electronic device that advertises a first packet in response to initially receiving a packet according to the first scan (or immediately after initially receiving a first packet according to the first scan). For example, the processor 201 may preferentially execute (or attempt), according to the second scan, synchronization to the periodic advertisement of the external electronic device that advertises the packet initially received through the first scan. For example, the processor 201 may determine an order of attempting synchronization to a periodic advertisement, after executing (or attempting) synchronization to the periodic advertisement of the external electronic device. Since a probability that the external electronic device advertising the packet initially received according to the first scan is used as an audio source device may be relatively high, the processor 201 may execute this operation. This operation is exemplified in a description of FIG. 14.

FIG. 14 illustrates a flowchart illustrating an exemplary method for preferentially executing synchronization to a periodic advertisement of an external electronic device advertising a packet initially received through a first scan according to a second scan.

Referring to FIG. 14, in operation 1401, the processor 201 may initially receive a packet (e.g., an extended advertising packet) according to the first scan exemplified in the description of FIG. 3.

In operation 1403, the processor 201 may synchronize to a periodic advertisement of an external electronic device advertising the packet according to the second scan exemplified in the description of FIG. 3, in response to receiving the packet. For example, the processor 201 may synchronize to the periodic advertisement of the external electronic device by using the packet received in operation 1401.

For example, synchronization to the periodic advertisement of the external electronic device may be synchronization to a periodic advertisement that is initially executed after detecting the event exemplified in the description of FIG. 3 (e.g., an event for discovering an audio source device for a broadcasting service to be provided through the audio sink device 101 (or the audio sink device 101 and the other audio sink device 102)). For example, the processor 201 may execute the synchronization to the periodic advertisement of the external electronic device, in preference to receiving one or more packets according to the first scan executed in response to the event (e.g., operation 1405) and determining an order of attempting synchronization to a periodic advertisement in relation to the one or more packets (e.g., operation 1407).

In operation 1405, the processor 201 may receive the one or more packets (e.g., one or more extended advertising packets) respectively advertised from the one or more external electronic devices according to the first scan, based on synchronizing to the periodic advertisement of the external electronic device.

In operation 1407, the processor 201 may determine an order of attempting synchronization to a periodic advertisement to be executed according to the second scan. For example, the processor 201 may determine an order of attempting synchronization to a periodic advertisement in relation to the one or more packets. For example, in order to determine the order, at least a portion of operations exemplified in the descriptions of FIG. 8 to FIG. 13 may be executed in the electronic device 111.

As described above, the electronic device 111 may provide an enhanced broadcasting service by preferentially executing synchronization to a periodic advertisement of an external electronic device advertising a packet initially received according to the first scan.

Although not exemplified in the descriptions of FIG. 8 to FIG. 14, the processor 201 may change an order of attempting synchronization to a periodic advertisement according to a user input. For example, the user input may include an input for scrolling the device list exemplified in the description (e.g., operation 307) of FIG. 3. For example, the processor 201 may change the order by executing at least a portion of operations exemplified in the descriptions of FIG. 8 to FIG. 14, based on the user input. As a non-limiting example, the processor 201 may determine an order of attempting synchronization to one or more periodic advertisements respectively caused from one or more external electronic devices respectively represented by one or more visual objects newly displayed in the device list based on the user input, according to a received strength, a use history, and/or a preference of a user, with respect to the one or more external electronic devices.

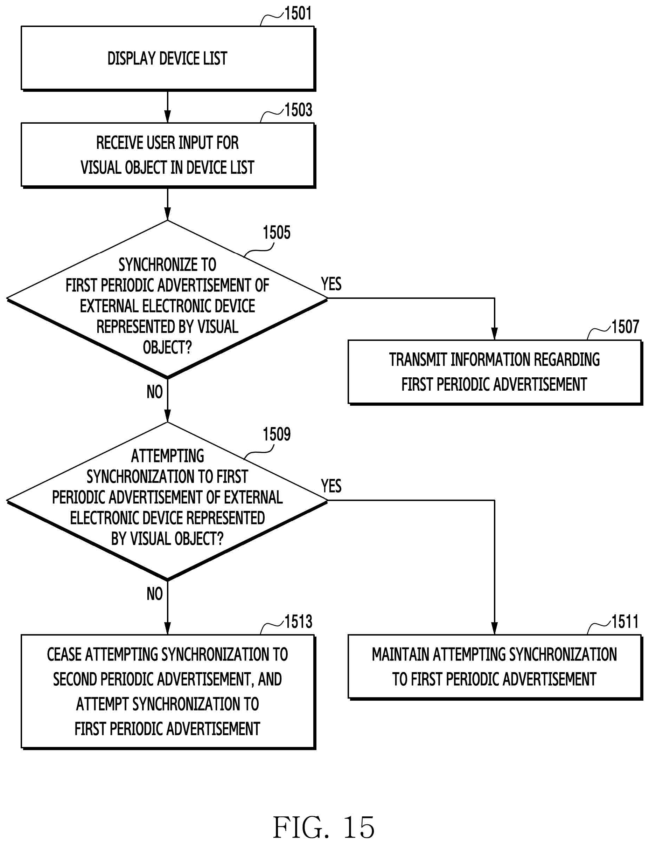

For example, the processor 201 may receive or detect a user input for a visual object in the above-exemplified device list. For example, the user input for the visual object may be received to determine an audio source device providing audio outputted through the audio sink device 101 (or the audio sink device 101 and the other audio sink device 102). As a non-limiting example, the user input for the visual object may be received before synchronizing to a periodic advertisement of an external electronic device represented by the visual object. An operation executed in response to the user input for the visual object received before the synchronization to the periodic advertisement of the external electronic device is exemplified in a description of FIG. 15.

FIG. 15 illustrates a flowchart illustrating an exemplary method for executing synchronization to a periodic advertisement while displaying a device list in response to a user input.

Referring to FIG. 15, in operation 1501, the processor 201 may display the above-exemplified device list. As a non-limiting example, the device list may include a visual object corresponding to an external electronic device displayed based on receiving a packet advertised through an extended advertisement of the external electronic device, and another visual object corresponding to another external electronic device displayed based on receiving another packet advertised through an extended advertisement of the other external electronic device.

In operation 1503, the processor 201 may receive a user input for the visual object in the device list. For example, the user input may indicate selecting the external electronic device as an audio source device. For example, the user input may be received for the visual object among the visual object and the other visual object.

In operation 1505, the processor 201 may check whether synchronizing to a first periodic advertisement of the external electronic device represented by the visual object in response to the user input. For example, the processor 201 may execute operation 1507, based on the first periodic advertisement synchronized before the user input is received. For example, the processor 201 may execute operation 1509 based on the first periodic advertisement not synchronized before the user input is received.

In operation 1507, the processor 201 may transmit, to the audio sink device 101 through the communication link 131, information regarding the first periodic advertisement, on a condition that the synchronization to the first periodic advertisement is completed before the user input is received. For example, the processor 201 may transmit the information to cause the audio sink device 101 to synchronize to a BIS from the external electronic device. For example, the transmission of the information may be executed in response to the user input received in operation 1503.

In operation 1509, the processor 201 may check whether attempting synchronization to the first periodic advertisement of the external electronic device represented by the visual object on a condition that the synchronization to the first periodic advertisement is not completed before the user input is received. For example, the processor 201 may execute operation 1511 based on checking that attempting synchronization to the first periodic advertisement is being executed. For example, the processor 201 may execute operation 1513 based on checking that attempting synchronization to the first periodic advertisement is not being executed and attempting synchronization to a second periodic advertisement of the other external electronic device is being executed.

In operation 1511, the processor 201 may maintain attempting the synchronization to the first periodic advertisement according to a result of the checking in operation 1509. For example, since the user input indicates the synchronization to the first periodic advertisement, the processor 201 may maintain attempting the synchronization to the first periodic advertisement to provide feedback suitable for the user input.

In operation 1513, according to a result of the checking in operation 1509, the processor 201 may cease attempting the synchronization to the second periodic advertisement, which was executed before attempting the synchronization to the first periodic advertisement, and may attempt the synchronization to the first periodic advertisement. For example, the processor 201 may preferentially attempt the synchronization to the first periodic advertisement to provide feedback suitable for the user input.

Although not illustrated in FIG. 15, the processor 201 may resume attempting the synchronization to the second periodic advertisement, based on synchronizing to the first periodic advertisement. However, it is not limited thereto. For example, the processor 201 may cancel attempting the synchronization to the second periodic advertisement, based on synchronizing to the first periodic advertisement.

Although not illustrated in FIG. 15, the processor 201 may perform operation 1517, based on completing synchronizing to the first periodic advertisement in operation 1511 or operation 1513. For example, the processor 201 may transmit the information to cause the audio sink device 101 to synchronize to a BIS from the external electronic device.

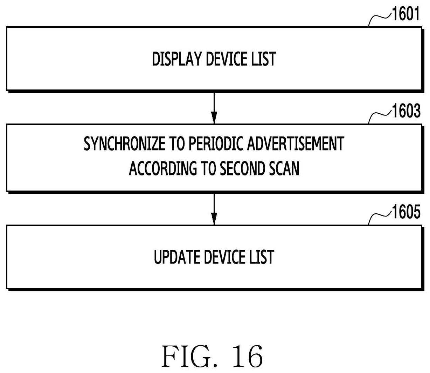

The above-exemplified device list may be updated according to synchronization to a periodic advertisement. The update of the device list is exemplified in a description of FIG. 16.

FIG. 16 illustrates a flowchart illustrating an exemplary method for updating a device list according to synchronization to a periodic advertisement.

Referring to FIG. 16, in operation 1601, the processor 201 may display the above-exemplified device list. For example, operation 1601 may correspond to operation 307 of FIG. 3. For example, the processor 201 may display the device list including a visual object representing an external electronic device as a candidate audio source device.

In operation 1603, the processor 201 may synchronize to a periodic advertisement of the external electronic device according to the second scan exemplified in the description of FIG. 3, while the device list including the visual object is displayed. For example, operation 1603 may correspond to operation 309 of FIG. 3.

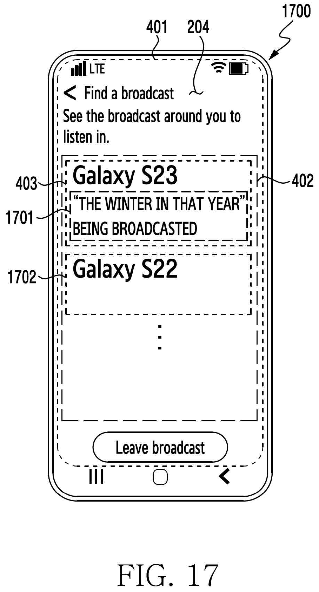

In operation 1605, the processor 201 may update the device list, based on synchronizing to the periodic advertisement of the external electronic device. For example, the processor 201 may update the device list, by further displaying, as associated with the visual object, information regarding a BIS from the external electronic device, based on synchronizing to the periodic advertisement of the external electronic device. For example, in a case that a packet (e.g., the packet received in operation 305 of FIG. 3) advertised through an extended advertisement of the external electronic device does not include information regarding a broadcasting service (or an audio broadcasting service) provided from the external electronic device (or information regarding content provided through the broadcasting service), the processor 201 may further display, as associated with the visual object, the information regarding the broadcasting service (or the information regarding the content), obtained according to the synchronization to the periodic advertisement of the external electronic device. The information regarding the broadcasting service (or the information regarding the content) may be displayed as the information regarding the BIS. The device list updated according to operation 1605 is exemplified in a description of FIG. 17.

FIG. 17 illustrates an example of a device list updated according to synchronization to a periodic advertisement.

Referring to FIG. 17, the processor 201 may further display information 1701, as associated with a visual object 403 in a device list 402 in a user interface 401, based on the synchronization to the periodic advertisement of the external electronic device, as in a state 1700. As a non-limiting example, the information 1701 may be text. For example, the information 1701 may include information regarding the BIS from the external electronic device, obtained according to the synchronization to the periodic advertisement of the external electronic device executed in operation 1603. As a non-limiting example, the information 1701 may include a name (e.g., "The winter in that year") of content provided through the BIS from the external electronic device. For example, displaying the information 1701 as associated with the visual object 403 may include displaying the information 1701 within the visual object 403. However, it is not limited thereto.

As a non-limiting example, the device list 402 may further include another visual object 1702 representing another external electronic device discovered according to the first scan as another candidate audio source device. For example, the synchronization to a periodic advertisement of the other external electronic device may not be completed, unlike the synchronization to the periodic advertisement of the external electronic device. For example, in order to indicate that, among the periodic advertisement of the external electronic device and the periodic advertisement of the other external electronic device, the periodic advertisement of the external electronic device is synchronized by the electronic device 111, the visual object 403 may further include the information 1701 than the visual object 1702. As a non-limiting example, the visual object 403 may be positioned at a top of the display 204 relative to the visual object 1702, in order to indicate that the synchronization to the periodic advertisement of the external electronic device is executed and the synchronization to the periodic advertisement of the other external electronic device is not executed.

As a non-limiting example, the processor 201 may receive a touch input for the visual object 403. For example, the processor 201 may transmit, to the audio sink device 101 through the communication link 131, information regarding the periodic advertisement obtained according to the synchronization, in response to the touch input. As a non-limiting example, the information may be transmitted through an add source operation of broadcast audio scan service (BASS).

For example, the audio sink device 101 may synchronize to the periodic advertisement of the external electronic device, based on the information received from the electronic device 111 through the communication link 131. For example, the audio sink device 101 may receive data for the BIS broadcasted from the external electronic device according to the synchronization to the periodic advertisement of the external electronic device. For example, the audio sink device 101 may output audio based on the data.

The above-exemplified electronic device 111 may be implemented as an electronic device 1801 exemplified in a description of FIG. 18.

FIG. 18 is a block diagram illustrating an electronic device 1801 in a network environment 1800 according to various embodiments. Referring to FIG. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module(SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 1864dB or less) for implementing mMTC, or U-plane latency (e.g., 0.5ms or less for each of downlink (DL) and uplink (UL), or a round trip of 18ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

As described above, an electronic device (e.g., the electronic device 111) assisting an audio sink device (e.g., the audio sink device 101) may comprise memory (e.g., the memory 203) storing instructions, a display (e.g., the display 204), a communication circuit (e.g., the communication circuit 202) for Bluetooth low energy (BLE), and a processor (e.g., the processor 201). The instructions, when executed by the processor, may cause the electronic device to, based on detecting an event to discover an audio source device for a broadcasting service to be provided through the audio sink device, execute a first scan regarding an extended advertisement caused around the electronic device by using the communication circuit, receive, according to the first scan, a packet advertised through an extended advertisement of an external electronic device, based on the reception of the packet, display, before synchronizing to a periodic advertisement of the external electronic device that is indicated by the packet, a device list that includes a visual object representing the external electronic device as a candidate audio source device on the display, and while the device list including the visual object is displayed, synchronize, according to a second scan regarding a periodic advertisement caused around the electronic device, to the periodic advertisement of the external electronic device.

For example, the instructions, when executed by the processor, may further cause the electronic device to, while executing the first scan, count a number of external electronic devices discovered in accordance with the first scan, and based on checking that the number of the external electronic devices counted according to the reception of the packet reaches a reference number, display the device list including visual objects representing the external electronic device as candidate audio source devices. For example, the visual objects may include the visual object.

For example, the instructions, when executed by the processor, may further cause the electronic device to, while executing the first scan, check whether a reference time is elapsed since executing the first scan, and based on checking, after receiving the packet, that the reference time is elapsed, display the device list including the visual object.

For example, the instructions, when executed by the processor, may further cause the electronic device to enable a timer in response to the reception of the packet, display, based on expiry of the timer, the device list, and based on receiving, before expiry of the timer, another packet advertised through an extended advertisement of another external electronic device according to the first scan, refrain from displaying the device list including the visual object and reset the timer.

For example, the instructions, when executed by the processor, may further cause the electronic device to, receive another packet advertised through an extended advertisement of another external electronic device according to the first scan, based on a received strength of the packet greater than the received strength of the other packet, attempt, before to attempt a synchronization to a periodic advertisement of the other external electronic device according to the second scan, the synchronization to the periodic advertisement of the external electronic device according to the second scan, while the device list is displayed, and based on the received strength of the packet less than the received strength of the other packet, attempt, before to attempt the synchronization to the periodic advertisement of the external electronic device according to the second scan, the synchronization to the periodic advertisement of the other external electronic device according to the second scan, while the device list is displayed.

For example, the instructions, when executed by the processor, may further cause the electronic device to receive another packet advertised through an extended advertisement of another external electronic device according to the first scan, and in accordance with information regarding a use history of the broadcasting service stored in the memory before detecting the event, attempt, before to attempt a synchronization to a periodic advertisement of the other external electronic device according to the second scan, the synchronization to the periodic advertisement of the external electronic device according to the second scan, while the device list is displayed.

For example, the instructions, when executed by the processor, may further cause the electronic device to receive another packet advertised through an extended advertisement of another external electronic device according to the first scan, and in accordance with information regarding a preference of a user of the electronic device stored in the memory before detecting the event, attempt, before to attempt a synchronization of a periodic advertisement of the other external electronic device according to the second scan, the synchronization to the periodic advertisement of the external electronic device according to the second scan, while the device list is displayed.

For example, the instructions, when executed by the processor, may further cause the electronic device to receive another packet advertised through an extended advertisement of another external electronic device according to the first scan, based on the reception of the packet and the reception of the other packet, display, before synchronizing to the periodic advertisement of the external electronic device indicated by the packet and synchronizing to a periodic advertisement of the other external electronic device indicated by the other packet, the device list including the visual object and another visual object that represents the other external electronic device as another candidate audio source device on the display, receive, while to attempt a synchronization to the periodic advertisement of the other external electronic device, a touch input on the visual object from among the visual object and the other visual object, and in response to the touch input, cease to attempt the synchronization to the periodic advertisement of the other external electronic device and attempt the synchronization to the periodic advertisement of the external electronic device.

For example, the instructions, when executed by the processor, may further cause the electronic device to resume, based on the synchronization to the periodic advertisement of the external electronic device, to attempt the synchronization to the periodic advertisement of the other external electronic device.

For example, the instructions, when executed by the processor, may further cause the electronic device to, based on synchronizing to the periodic advertisement of the external electronic device, further display at least portion of information regarding a broadcast isochronous stream (BIS) from the external electronic device, as associated with the visual object on the display.

For example, the instructions, when executed by the processor, may further cause the electronic device to transmit, in response to a touch input on the visual object displayed on the display, information regarding the periodic advertisement of the external electronic device through a communication link between the electronic device and the audio sink device to the audio sink device by using the communication circuit.

For example, the information regarding the periodic advertisement of the external electronic device may be transmitted through an add source operation of broadcast audio scan service (BASS).

As described above, a method executed in an electronic device (e.g., the electronic device 111) assisting an audio sink device (e.g., the audio sink device 101) and having a display (e.g., the display 204) and a communication circuit (e.g., the communication circuit 203) for Bluetooth low energy (BLE) may comprise, based on detecting an event to discover an audio source device for a broadcasting service to be provided through the audio sink device, executing a first scan regarding an extended advertisement caused around the electronic device by using the communication circuit, receiving, according to the first scan, a packet advertised through an extended advertisement of an external electronic device, based on the reception of the packet, displaying, before synchronizing to a periodic advertisement of the external electronic device that is indicated by the packet, a device list that includes a visual object representing the external electronic device as a candidate audio source device on the display, and while the device list including the visual object is displayed, synchronizing, according to a second scan regarding a periodic advertisement caused around the electronic device, to the periodic advertisement of the external electronic device.

For example, the method may further comprise, while executing the first scan, counting a number of external electronic devices discovered in accordance with the first scan, and based on checking that the number of the external electronic devices counted according the reception of the packet reaches a reference number, displaying the device list including visual objects representing the external electronic device as candidate audio source devices. The visual objects may include the visual object.

For example, the method may further comprise, while executing the first scan, checking whether a reference time is elapsed since executing the first scan, and based on checking, after receiving the packet, that the reference time is elapsed, displaying the device list.

For example, the method may further comprise resetting a timer enabled according to the first scan, in response to the reception of the packet, displaying the device list based on expiry of the timer reset in response to the reception of the packet, and refraining from displaying the device list based on receiving, before expiry of the timer reset in response to the reception of the packet, another packet advertised through an extended advertisement of another external electronic device according to the first scan.

For example, the method may further comprise receiving another packet advertised through an extended advertisement of another external electronic device according to the first scan, based on a received strength of the packet greater than a received strength of the other packet, attempting, before to attempt a synchronization to a periodic advertisement of the other external electronic device according to the second scan, the synchronization to the periodic advertisement of the external electronic device according to the second scan, while the device list is displayed, and based on the received strength of the packet less than the received strength of the other packet, attempting, before to attempt the synchronization to the periodic advertisement of the external electronic device according to the second scan, the synchronization to the periodic advertisement of the other external electronic device according to the second scan, while the device list is displayed.

For example, the method may further comprise receiving another packet advertised through an extended advertisement of another external electronic device according to the first scan, and in accordance with information regarding a preference of the electronic device stored in the memory before detecting the event, attempting, before to attempt a synchronization to a periodic advertisement of the other external electronic device according to the second scan, the synchronization to the periodic advertisement of the external electronic device according to the second scan, while the device list is displayed.

For example, the method may further comprise receiving, according to the first scan, another packet advertised through an extended advertisement of another external electronic device, displaying, on the display, before synchronizing to the periodic advertisement of the external electronic device indicated by the packet and a periodic advertisement of the other external electronic device indicated by the other packet based on the reception of the packet and the reception of the other packet, the device list including the visual object and another visual object representing the other external electronic device as another candidate audio source device, receiving a touch input on the visual object from among the visual object and the other visual object while attempting synchronization to the periodic advertisement of the other external electronic device, and, in response to the touch input, ceasing attempting the synchronization to the periodic advertisement of the other external electronic device and attempting synchronization to the periodic advertisement of the external electronic device.

As described above, a non-transitory computer readable storage medium may store one or more programs. The one or more programs may comprise instructions to, when executed by an electronic device, assisting an audio sink device, with a communication circuit for Bluetooth low energy (BLE) and a display, cause the electronic device to, based on detecting an event to discover an audio source device for a broadcasting service to be provided through the audio sink device, execute a first scan regarding an extended advertisement caused around the electronic device by using the communication circuit, receive, according to the first scan, a packet advertised through an extended advertisement of an external electronic device, based on the reception of the packet, display, before synchronizing to a periodic advertisement of the external electronic device that is indicated by the packet, a device list that includes a visual object representing the external electronic device as a candidate audio source device on the display, and while the device list including the visual object is displayed, synchronize, according to a second scan regarding a periodic advertisement caused around the electronic device, to the periodic advertisement of the external electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device assisting an audio sink device, the electronic device comprising:
memory storing instructions;
a display;
a communication circuit for Bluetooth low energy (BLE); and
a processor,
wherein the instructions, when executed by the processor, cause the electronic device to:
based on detecting an event to discover an audio source device for a broadcasting service to be provided through the audio sink device, execute a first scan regarding an extended advertisement caused around the electronic device by using the communication circuit;
receive, according to the first scan, a packet advertised through an extended advertisement of an external electronic device;
based on the reception of the packet, display, before synchronizing to a periodic advertisement of the external electronic device that is indicated by the packet, a device list that includes a visual object representing the external electronic device as a candidate audio source device on the display; and
while the device list including the visual object is displayed, synchronize, according to a second scan regarding a periodic advertisement caused around the electronic device, to the periodic advertisement of the external electronic device.

2. The electronic device of claim 1, wherein the instructions, when executed by the processor, further cause the electronic device to:
while executing the first scan, count a number of external electronic devices discovered in accordance with the first scan; and
based on checking that the number of the external electronic devices counted according to the reception of the packet reaches a reference number, display the device list including visual objects representing the external electronic device as candidate audio source devices, and
wherein the visual objects include the visual object.

3. The electronic device of claim 1, wherein the instructions, when executed by the processor, further cause the electronic device to:
while executing the first scan, check whether a reference time is elapsed since executing the first scan; and
based on checking, after receiving the packet, that the reference time is elapsed, display the device list including the visual object.

4. The electronic device of claim 1, wherein the instructions, when executed by the processor, further cause the electronic device to:
enable a timer in response to the reception of the packet;
display, based on expiry of the timer, the device list; and
based on receiving, before expiry of the timer, another packet advertised through an extended advertisement of another external electronic device according to the first scan, refrain from displaying the device list including the visual object and reset the timer.

5. The electronic device of claim 1, wherein the instructions, when executed by the processor, further cause the electronic device to:
receive another packet advertised through an extended advertisement of another external electronic device according to the first scan;
based on a received strength of the packet greater than a received strength of the other packet, attempt, before to attempt a synchronization to a periodic advertisement of the other external electronic device according to the second scan, the synchronization to the periodic advertisement of the external electronic device according to the second scan, while the device list is displayed; and
based on the received strength of the packet less than the received strength of the other packet, attempt, before to attempt the synchronization to the periodic advertisement of the external electronic device according to the second scan, the synchronization to the periodic advertisement of the other external electronic device according to the second scan, while the device list is displayed.

6. The electronic device of claim 1, wherein the instructions, when executed by the processor, further cause the electronic device to:
receive another packet advertised through an extended advertisement of another external electronic device according to the first scan; and
in accordance with information regarding a use history of the broadcasting service stored in the memory before detecting the event, attempt, before to attempt a synchronization to a periodic advertisement of the other external electronic device according to the second scan, the synchronization to the periodic advertisement of the external electronic device according to the second scan, while the device list is displayed.

7. The electronic device of claim 1, wherein the instructions, when executed by the processor, further cause the electronic device to:
receive another packet advertised through an extended advertisement of another external electronic device according to the first scan; and
in accordance with information regarding a preference of a user of the electronic device stored in the memory before detecting the event, attempt, before to attempt a synchronization of a periodic advertisement of the other external electronic device according to the second scan, the synchronization to the periodic advertisement of the external electronic device according to the second scan, while the device list is displayed.

8. The electronic device of claim 1, wherein the instructions, when executed by the processor, further cause the electronic device to:
receive another packet advertised through an extended advertisement of another external electronic device according to the first scan;
based on the reception of the packet and the reception of the other packet, display, before synchronizing to the periodic advertisement of the external electronic device indicated by the packet and synchronizing to a periodic advertisement of the other external electronic device indicated by the other packet, the device list including the visual object and another visual object that represents the other external electronic device as another candidate audio source device on the display;
receive, while to attempt a synchronization to the periodic advertisement of the other external electronic device, a touch input on the visual object from among the visual object and the other visual object; and
in response to the touch input, cease to attempt the synchronization to the periodic advertisement of the other external electronic device and attempt the synchronization to the periodic advertisement of the external electronic device.

9. The electronic device of claim 8, wherein the instructions, when executed by the processor, further cause the electronic device to:
resume, based on the synchronization to the periodic advertisement of the external electronic device, to attempt the synchronization to the periodic advertisement of the other external electronic device.

10. The electronic device of claim 1, wherein the instructions, when executed by the processor, further cause the electronic device to:
based on synchronizing to the periodic advertisement of the external electronic device, further display at least a portion of information regarding a broadcast isochronous stream (BIS) from the external electronic device, as associated with the visual object on the display.

11. The electronic device of claim 10, wherein the instructions, when executed by the processor, further cause the electronic device to:
transmit, in response to a touch input on the visual object displayed on the display, information regarding the periodic advertisement of the external electronic device through a communication link between the electronic device and the audio sink device to the audio sink device by using the communication circuit.

12. The electronic device of claim 11, wherein the information regarding the periodic advertisement of the external electronic device is transmitted through an add source operation of broadcast audio scan service (BASS).

13. A method executed in an electronic device that assists an audio sink device and has a communication circuit for Bluetooth low energy (BLE) and a display, the method comprising:
based on detecting an event to discover an audio source device for a broadcasting service to be provided through the audio sink device, executing a first scan regarding an extended advertisement caused around the electronic device by using the communication circuit;
receiving, according to the first scan, a packet advertised through an extended advertisement of an external electronic device;
based on the reception of the packet, displaying, before synchronizing to a periodic advertisement of the external electronic device that is indicated by the packet, a device list that includes a visual object representing the external electronic device as a candidate audio source device on the display; and
while the device list including the visual object is displayed, synchronizing, according to a second scan regarding a periodic advertisement caused around the electronic device, to the periodic advertisement of the external electronic device.

14. The method of claim 13, further comprising:
while executing the first scan, counting a number of external electronic devices discovered in accordance with the first scan; and
based on checking that the number of the external electronic devices counted according the reception of the packet reaches a reference number, displaying the device list including visual objects representing the external electronic device as candidate audio source devices,
wherein the visual objects include the visual object.

15. A non-transitory computer readable storage medium storing one or more programs, the one or more programs comprising instructions to, when executed by an electronic device, assisting an audio sink device, with a communication circuit for Bluetooth low energy (BLE) and a display, cause the electronic device to:
based on detecting an event to discover an audio source device for a broadcasting service to be provided through the audio sink device, execute a first scan regarding an extended advertisement caused around the electronic device by using the communication circuit;
receive, according to the first scan, a packet advertised through an extended advertisement of an external electronic device;
based on the reception of the packet, display, before synchronizing to a periodic advertisement of the external electronic device that is indicated by the packet, a device list that includes a visual object representing the external electronic device as a candidate audio source device on the display; and
while the device list including the visual object is displayed, synchronize, according to a second scan regarding a periodic advertisement caused around the electronic device, to the periodic advertisement of the external electronic device.
